# EUROPÄISCHE PATENTANMELDUNG

(11) **EP 4 772 276 A1**
(43) Veröffentlichungstag der Anmeldung: **08.07.2026**
(21) Anmeldenummer: 25216197.1
(22) Anmeldetag: 17.11.2025
(51) Int. Cl.: B01J 29/46

(54) **VERFAHREN ZUR HERSTELLUNG EINES EISENHALTIGEN KATALYSATORS AUF ZEOLITH-BASIS, EISENHALTIGER KATALYSATOR AUF ZEOLITH-BASIS UND VERWENDUNG DES EISENHALTIGEN KATALYSATORS AUF ZEOLITH-BASIS**

(30) Priorität: 04.12.2024 DE 102024136061
(71) Anmelder: Karlsruher Institut für Technologie, Körperschaft des öffentlichen Rechts, 76131 Karlsruhe (DE)
(72) Erfinder: Grunwaldt, Jan-Dierk, 76297 Stutensee (DE); Barth, Simon, 76571 Gaggenau (DE); Casapu, Maria, 75045 Walzbachtal (DE); Scheibe, Leo, 76137 Karlsruhe (DE)
(74) Vertreter: Müller-Boré & Partner Patentanwälte PartG mbB

(57) **Zusammenfassung**

Die vorliegende Erfindung betrifft ein Verfahren zur Herstellung eines eisenhaltigen Katalysators auf Zeolith-Basis, wobei das Verfahren das Umsetzen einer Suspension, die einen Zeolith, elementares Eisen und eine organische Säure umfasst, das Abtrennen eines festen Anteils der umgesetzten Suspension, und das Calcinieren des abgetrennten festen Anteils, unter Erhalten eines eisenhaltigen Katalysators auf Zeolith-Basis, umfasst. Weiterhin betrifft die vorliegende Erfindung einen durch das Verfahren erhältlichen eisenhaltigen Katalysator auf Zeolith-Basis, wobei die Eisenbeladung des eisenhaltigen Katalysators auf Zeolith-Basis von 0,01 bis 5 Gew.-% beträgt, und die Verwendung des eisenhaltigen Katalysators auf Zeolith-Basis. Die vorliegende Erfindung kann auf bimetallische Systeme erweitert werden, so dass das erfindungsgemäße Verfahren in einer weiteren Ausführungsform das zusätzliche Umsetzen mit einem Kupfersalz, bevorzugt mit einem Kupfersalz einer organischen Säure, umfassen kann und eine Kupferbeladung des durch das Verfahren erhältlichen eisenhaltigen Katalysators auf Zeolith-Basis von 0,01 bis 5 Gew.-% betragen kann.

## Beschreibung

Die vorliegende Erfindung betrifft ein Verfahren zur Herstellung eines eisenhaltigen Katalysators auf Zeolith-Basis, einen eisenhaltigen Katalysator auf Zeolith-Basis, erhältlich durch das Verfahren, und die Verwendung des eisenhaltigen Katalysators auf Zeolith-Basis.

Im Stand der Technik sind eisenhaltige Katalysatoren auf Zeolith-Basis bekannt. Eisenhaltige Katalysatoren auf Zeolith-Basis sind weit verbreitet und weisen eine hohe hydrothermale Stabilität auf, weshalb sie Gegenstand aktueller Untersuchungen sind. Insbesondere sind eisenhaltige Katalysatoren auf Zeolith-Basis von Relevanz, da diese Katalysatoren mit dem Übergangsmetall Eisen eine hervorragende katalytische Aktivität für die oxidative Spaltung, die N₂O-Zersetzung und die selektive katalytische Reduktion von NOₓ aufweisen und dabei relativ kostengünstig sind.

Die Herstellung von eisenhaltigen Katalysatoren auf Zeolith-Basis erfolgt in der Regel durch traditionellen Ionenaustausch und Imprägnierung. Während letzteres oft zu hohen Anteilen an größeren Fe-Oligomeren und Fe₂O₃-Teilchen mit geringer Kristallinität führt, lässt sich ersteres schlecht kontrollieren. Darüber hinaus leiden beide Methoden unter der teilweisen Oxidation von Fe²⁺ zu Fe³⁺ durch Luftsauerstoff schon vor dem Umsetzen mit dem Zeolith und der daraus resultierenden Bildung von Eisenclustern, d.h. Oxide des Eisens, bei denen mehrere Eisenatome (Fe) und Sauerstoffatome (O) zusammen vorliegen. Insbesondere bei kleinporigen Zeolithgerüsten wie SSZ-13 sind diese Eisencluster in der Regel größer als die verfügbaren Poren, was zu schlechten Ionenaustauschraten und einer verstärkten Bildung von Fe₂O₃-Partikeln führt. Darüber hinaus sind die Fe²⁺-Quellen für den herkömmlichen Ionenaustausch aufgrund der luftempfindlichen Natur der Fe²⁺-Salze begrenzt. Häufig verwendete Salze wie FeSO₄ stellen zudem eine Herausforderung dar, da SO₄²⁻-Ionen nicht vollständig aus dem synthetisierten Katalysator entfernt werden können. Eine von FeSO₄ ausgehende Synthese bringt ein potentes Katalysatorgift während der Reaktion in das System. Die katalytische Aktivität ist somit schon vor der ersten Anwendung abgesenkt. Ähnlich verhält es sich bei Ionen wie beispielsweise Chlorid, Bromid oder Phosphaten (F. Gao, Y. Wang, M. Kollar, N. M. Washton, J. Szanyi and C. H. Peden, Catalysts Today, 2015, 258, 347-358; F. Gao, Y. Zheng, R. K. Kukkadapu, Y. Wang, E. D. Walter, B. Schwenzer, J. Szanyi and C. H. Peden, ACS Catalysis, 2016, 6, 2939-2954).

Es wird davon ausgegangen, dass unter anderem monomere [Fe-(OH)₂]⁺-Zentren in den eisenhaltigen Katalysatoren auf Zeolith-Basis die aktiven Spezies für die selektive katalytische Reduktion (SCR) darstellen. Daher ist die Abstimmung der Herstellung von Fe-Zeolithen auf eine Vielzahl von monomeren Zentren entscheidend, um eine hohe katalytische Aktivität zu erreichen. Viele der hydrothermalen Verfahren liefern zwar den gewünschten ionenausgetauschten eisenhaltigen Katalysatoren auf Zeolith-Basis mit einem hohen Anteil an monomeren Fe-Zentren, doch ist bei diesen Methoden auch der Einschluss von Eisenclustern oder größeren Eisenoligomeren in den Zeolithen möglich (K. Niu, G. Li, J. Liu and Y. Wei, Journal of Solid State Chemistry, 2020, 287,121330).

Außerdem sind viele Herstellungsverfahren von eisenhaltigen Katalysatoren auf Zeolith-Basis aufgrund der Eigenschaften der eisenhaltigen Reagenzien für deren Herstellung auf eine bestimmte Morphologie beschränkt. Eine verbesserte Methode des Ionenaustauschs ist die *in-situ* Erzeugung von Fe²⁺-Ionen durch Auflösen von elementarem Eisen in verdünnter HCl (R. Long and R. T. Yang, Catalysis Letters, 2001, 74, 201-205). Allerdings tritt bei der Verwendung von HCl die Bildung von FeₓO_{y}-Clustern bereits bei 1,2 Gew.-% Fe auf, und die Verwendung von korrosiver HCl wirft zusätzliche Probleme auf, wie beispielsweise die chlorinduzierte Dealuminierung des Zeoliths (M. Schwidder, M. S. Kumar, K. Klementiev, M. M. Pohl, A. Brückner and W. Grünert, Journal of Catalysis, 2005, 231, 314-330).

Der vorliegenden Erfindung liegt somit die Aufgabe zugrunde, ein Verfahren zur Herstellung eines eisenhaltigen Katalysators auf Zeolith-Basis, einen eisenhaltigen Katalysator auf Zeolith-Basis, erhältlich durch das besagte Verfahren, sowie dessen Verwendung bereitzustellen, womit die oben genannten Nachteile der bekannten Verfahren überwunden werden können. Zudem wird eine einfachere Handhabbarkeit während der Reaktion und Upscaling im Vergleich zu herkömmlichen Verfahren ermöglicht.

Die vorstehenden Aufgaben werden durch die in den Ansprüchen gekennzeichneten Ausführungsformen der vorliegenden Erfindung gelöst.

Insbesondere wird erfindungsgemäß ein Verfahren zur Herstellung eines eisenhaltigen Katalysators auf Zeolith-Basis bereitgestellt, wobei das Verfahren die folgenden Schritte umfasst:
(a) Umsetzen einer Suspension, die einen Zeolith, elementares Eisen und eine organische Säure umfasst;
(b) Abtrennen eines festen Anteils der in Schritt (a) umgesetzten Suspension; und
(c) Calcinieren des in Schritt (b) abgetrennten festen Anteils, unter Erhalten eines eisenhaltigen Katalysators auf Zeolith-Basis.

Das erfindungsgemäße Verfahren, bei dem elementares Eisen *in-situ* mit einer organischen Säure umgesetzt wird, erlaubt die Herstellung eines eisenhaltigen Katalysators auf Zeolith-Basis, ohne dass Anionen, die als Katalysatorgift wirken können, im eisenhaltigen Katalysators auf Zeolith-Basis nach dem Calcinieren vorliegen. Die Verwendung von organischen Säuren, die durch das Calcinieren restlos aus dem Katalysator entfernt werden können, führt zu einer höheren Aktivität des erhaltenen Katalysators, in den keine Fremdatome wie Chlor, Schwefel, Phosphor oder ähnliches eingebracht werden, die als Katalysatorgift wirken können. Zudem treten im Vergleich zu anderen Säuren wie beispielsweise HCl keine Schäden wie Dealuminierung am Zeolith auf. Dies führt zu einem deutlich einfacher handhabbaren und skalierbaren Herstellungsverfahren.

Im Folgenden wird das Verfahren zur Herstellung eines eisenhaltigen Katalysators auf Zeolith-Basis näher erläutert.

Im erfindungsgemäßen Verfahren wird zunächst wird eine Suspension, die einen Zeolith, elementares Eisen und eine organische Säure umfasst, umgesetzt. Der Schritt (a) kann unter Einsatz von Lösungsmitteln oder lösungsmittelfrei durchgeführt werden, wobei die Verwendung von Wasser als Lösungsmittel bevorzugt ist. Wasser kann dabei entweder zusätzlich zu der Suspension gegeben werden oder liegt bevorzugt bereits in der Säure bei der Verwendung einer wässrigen verdünnten organischen Säure vor. Es können ebenfalls andere Lösungsmittel oder Gemische von Lösungsmitteln in Schritt (a) verwendet werden, wobei diese Lösungsmittel oder Gemische von Lösungsmitteln auch zusätzlich zu Wasser verwendet werden können. Diese Lösungsmittel können organisch oder anorganisch, bevorzugt organisch, sein und werden verwendet, um eine Suspension eines Zeoliths, elementaren Eisens und einer organischen Säure zu erzeugen. Typischerweise weisen solche Lösungsmittel eine ausreichende Polarität auf, um die organische Säure zu lösen, wobei sie gleichzeitig eine geringe Viskosität und Verdampfungsrate aufweisen, um eine einfache Handhabung und Verarbeitung zu ermöglichen. Beispiele für Lösungsmittel, die diese Eigenschaften aufweisen, umfassen, sind jedoch nicht beschränkt auf, Dimethylsulfoxid (DMSO), Tetrahydrofuran (THF), Dimethylformamid (DMF), Acetonitril, Aceton, Ethylacetat, Dichlormethan und Chloroform. Dabei sind Schwefel- und Chlor-freie Lösungsmittel und solche mit hoher Siedetemperatur bevorzugt zu vermeiden. Die Menge des zusätzlich zugegebenen Lösungsmittels beträgt typischerweise 0 bis 500 Gew.-%, bevorzugt zwischen 0 und 200 Gew.-%, mehr bevorzugt 0 und 50 Gew.-%, bezogen auf das Gesamtgewicht der Suspension, wobei das Verhältnis des Lösungsmittels zu den anderen Bestandteilen der Suspension so gewählt ist, dass eine homogene Verteilung der suspendierten Feststoffe gewährleistet wird.

Der Begriff Umsetzen in Schritt (a) bezieht sich sowohl auf die gleichzeitige als auch auf die sequenzielle Reaktion der Suspension, die Zeolith, elementares Eisen und eine organische Säure umfasst. Bevorzugt erfolgt die Umsetzung der organischen Säure in Gegenwart des Zeoliths, da dies zu einer langsamen und kontrollierten *in-situ* Freisetzung von Fe²⁺-Ionen führt. Diese kontrollierte Freisetzung verhindert die Bildung von FeₓO_{y}-Spezies, welche die katalytische Aktivität des eisenhaltigen Katalysators auf Zeolith-Basis beeinträchtigen. FeₓO_{y}-Spezies, die in der vorliegenden Anmeldung auch als Eisencluster bezeichnet werden, sind Oxide des Eisens, bei denen mehrere Eisenatome (Fe) und Sauerstoffatome (O) zusammen vorliegen. Diese Spezies können in verschiedenen Formen und Stöchiometrien auftreten, sind amorph aber können auch Oxide sein wie z.B. Fe₂O₃ (Eisen(III)-oxid) oder Fe₃O₄ (Magnetit). Eisencluster entstehen durch die unkontrollierte Oxidation von Eisen und neigen dazu, auf der Oberfläche des Zeoliths zu aggregieren, was zu einer Blockierung der Poren führt. Dies reduziert die spezifische Oberfläche und behindert den Zugang von Reaktanten zu den aktiven Zentren im Zeolith. Durch die kontrollierte Freisetzung von Fe²⁺-Ionen in Schritt (a) des Verfahrens wird die Bildung solcher FeₓO_{y}-Spezies unterdrückt. Stattdessen verbleiben die Eisenionen fein verteilt als monomere [Fe-(OH)₂]⁺-Zentren im Zeolithgerüst, was die katalytische Aktivität steigert und eine gleichmäßige Eisenverteilung in dem Zeolith gewährleistet.

Durch die bevorzugte Gegenwart des Zeoliths während der Umsetzung des elementaren Eisens mit der organischen Säure wird eine feinere Verteilung des Eisens innerhalb der Zeolithstruktur erreicht, was die katalytischen Eigenschaften des resultierenden Materials deutlich verbessert. Insbesondere fördert dies die Bildung von monomeren [Fe-(OH)₂]⁺-Zentren im Zeolith. Diese spezifischen Eisen-Spezies sind von besonderer Bedeutung für die katalytische Aktivität des eisenhaltigen Katalysators auf Zeolith-Basis, da sie als aktive Zentren für verschiedene katalytische Reaktionen, wie beispielsweise die selektive katalytische Reduktion (SCR) von Stickoxiden oder die Oxidation von Kohlenwasserstoffen, dienen. Dies führt somit zu einem hochdispersen und homogen verteilten Eisengehalt im Zeolith, der die Bildung von Eisenclustern verringert und gleichzeitig die Anzahl an aktiven katalytischen Zentren erhöht. Dies resultiert in einer verbesserten katalytischen Leistungsfähigkeit des eisenhaltigen Katalysators auf Zeolith-Basis.

Bei einem sequenziellen Umsetzen in Schritt (a) wird zunächst das elementare Eisen in Anwesenheit der organischen Säure umgesetzt, um das Eisensalz der organischen Säure zu bilden, sodass das Eisen in Lösung geht und Fe²⁺-Ionen freisetzt. Anschließend wird der Zeolith zu dieser Lösung zugegeben.

Der Schritt (a) wird bevorzugt unter Vermeidung von Stoffen durchgeführt, die als Katalysatorgifte wirken können. Dazu zählen insbesondere Halogenide wie Chloride, Bromide und Fluoride sowie Sulfate, Phosphate, Nitrate oder Carbonat. Weitere Beispiele für katalysatorgiftige Substanzen sind Arsenate, Blei-, Cadmium- und Zinkverbindungen, Schwermetalle wie Quecksilber und Kobalt sowie organische Verbindungen wie Dioxine und Polyzyklische Aromatische Kohlenwasserstoffe (PAKs). Die Vermeidung dieser Stoffe ist entscheidend, um die Integrität und katalytische Aktivität des eisenhaltigen Katalysators auf Zeolith-Basis zu gewährleisten, da sie die katalytische Aktivität negativ beeinflussen und die Gesamtleistung des Katalysators herabsetzen können.

Weiterhin wird der Schritt (a) bevorzugt ohne externe Zugabe von Eisensalzen durchgeführt, bevorzugt erfolgt die Bildung von Fe²⁺-Ionen *in-situ.* Der Vorteil liegt dabei darin, dass eine vorherige Oxidation der Eisenionen durch Luftsauerstoff vermieden wird. Dadurch wird die unerwünschte Bildung von Eisenclustern verhindert, die die katalytische Aktivität des eisenhaltigen Katalysators auf Zeolith-Basis negativ beeinflussen. Zudem ermöglicht die kontrollierte Freisetzung der Ionen eine gleichmäßige Verteilung der aktiven Eisen-Spezies im Zeolith, was die katalytische Aktivität und Stabilität des eisenhaltigen Katalysators verbessert. Diese *in-situ* Bildung von Fe²⁺-Ionen sorgt für eine verbesserte Kontrolle über den Reaktionsverlauf und die katalytischen Eigenschaften des eisenhaltigen Katalysators auf Zeolith-Basis.

Die organische Säure in Schritt (a) ist typischerweise eine Verbindung, die aus der Gruppe, bestehend aus Ameisensäure, Essigsäure, Propionsäure und Oxalsäure, ausgewählt ist. Allerdings ist die organische Säure als solche nicht weiter eingeschränkt und kann auch andere organische Säuren wie beispielsweise Buttersäure, Benzoesäure, Milchsäure, Fumarsäure umfassen, ist aber nicht auf die genannten Beispiele beschränkt. Bevorzugt wird in Schritt (a) Ameisensäure oder Essigsäure eingesetzt, wobei Essigsäure mehr bevorzugt ist. In diesem Zusammenhang können auch Gemische der vorstehend aufgeführten Säuren genutzt werden, wobei die Nutzung nur einer einzigen Säure bevorzugt ist.

Ameisensäure und Essigsäure werden aufgrund ihrer optimalen molekularen Größe und Struktur bevorzugt, um die Bildung von aktiven Eisen-Spezies im Zeolith zu ermöglichen. Diese organischen Säuren besitzen vergleichsweise kleine Moleküle, die es erlauben, effizient in die Porenstrukturen des Zeoliths einzudringen. Dies fördert eine gleichmäßige Verteilung der Eisen-Spezies und verhindert die Bildung von großen Komplexen, die möglicherweise nicht mehr in die Poren des Zeoliths passen. Insbesondere ist Essigsäure bevorzugt, da sie nicht nur eine ausgezeichnete Reaktivität in Bezug auf das elementare Eisen aufweist, sondern auch die Bildung stabiler Eisen-Spezies in dem Zeolith begünstigt, die eine hohe katalytische Aktivität aufweisen. Das Reaktionsverhalten von Essigsäure ermöglicht eine kontrollierte Freisetzung von Fe²⁺-Ionen, was entscheidend für die Vermeidung von Aggregationen und der Bildung von großen Eisenclustern ist. Durch diese kontrollierte Freisetzung bleibt die katalytische Aktivität erhalten, da eine hohe Dichte an aktiven Zentren wie monomeren [Fe-(OH)₂]⁺-Zentren im Zeolith gebildet wird.

Typischerweise ist die organische Säure in Schritt (a) eine wässrige verdünnte organische Säure, die in einem Massenverhältnis aus Säure zu Wasser in einem Bereich von 1 : 0,1 bis 500, bevorzugt in einem Bereich von 1 : 0,5 bis 100, mehr bevorzugt in einem Bereich von 1 : 0,8 bis 50 und noch mehr bevorzugt in einem Bereich von 1 : 1 bis 5 vorliegt. Diese Verdünnung ermöglicht eine kontrollierte Reaktion zwischen der organischen Säure und den anderen Bestandteilen der Suspension. Zudem kann durch den Einsatz einer wässrigen verdünnten organischen Säure typischerweise auf die Zugabe weiterer Lösungsmittel verzichtet werden. Ein vorstehend definiertes Massenverhältnis aus Säure zu Wasser sorgt dafür, dass die Reaktivität der organischen Säure optimal genutzt wird, ohne dass es zu einer Überkonzentration kommt, die unerwünschte Nebenreaktionen oder die Bildung von großen Komplexen zur Folge hat. Durch die Verwendung einer verdünnten Lösung kann die Freisetzung der Fe²⁺-Ionen gesteuert werden, was zu einer gleichmäßigeren Verteilung des Eisens im Zeolith führt und somit die katalytische Aktivität des resultierenden Katalysators verbessert.

Der Zeolith in Schritt (a) ist nicht weiter eingeschränkt, solange der Zeolith für das Umsetzen in Schritt (a) geeignet ist. Typischerweise ist der Zeolith ein Aluminosilikat wie AEI, CHA, MFI, Beta-Zeolith, Mordenit, Ferrierit und Erionit oder ein Aluminophosphat wie SAPO-34. Bevorzugt ist der Zeolith in Schritt (a) ein Aluminosilikat, mehr bevorzugt SSZ-13 oder ZSM-5, ZSM-11, SSZ-39, am meisten bevorzugt ZSM-5 oder ZSM-11. Diese Zeolithe zeichnen sich durch eine Vielzahl von Porengrößen und -strukturen aus, was ihre Fähigkeit zur Adsorption und Katalyse beeinflusst. Bevorzugt sind SSZ-13 oder ZSM-5 die Zeolithe in Schritt (a), beruhend auf ihren herausragenden katalytischen Eigenschaften und ihrer spezifischen Struktur. SSZ-13, auch bekannt als "Sodium Silicate Zeolite 13", ist ein Zeolith mit einer besonders feinen Porenstruktur, die einen Porendurchmesser von etwa 3,8 Å aufweist. "Etwa" bezieht sich in der vorliegenden Anmeldung auf einen Wert in einem Bereich von ± 10% des angegebenen Wertes. Diese Struktur ermöglicht eine selektive Adsorption und Katalyse kleiner Moleküle, was SSZ-13 ideal für Anwendungen in der Molekültrennung und der Katalyse macht. SSZ-13 eignet sich hervorragend für die Adsorption und Katalyse kleiner Moleküle, die in Abgasen vorkommen, wie Stickoxide (NOₓ) und Kohlenwasserstoffe (HC). Die feine Porenstruktur ermöglicht eine selektive Reaktion mit diesen Schadstoffen und fördert die Umwandlung in weniger schädliche Verbindungen, was die Abgasreinigung effizienter macht. Zudem bietet SSZ-13 eine hohe thermische Stabilität und chemische Beständigkeit, was ihn für anspruchsvolle Reaktionsbedingungen geeignet macht. ZSM-5, was für "Zeolite Socony Mobil-5" steht, hat eine Porenstruktur mit einem Durchmesser von etwa 5,5 Å, die es ermöglicht, eine Vielzahl von Molekülen zur Katalyse aufzunehmen, darunter auch größere organische Moleküle. ZSM-5 hat sich ebenfalls als besonders effektiv in der Abgasbehandlung erwiesen. Durch seine Fähigkeit, sowohl die oxidative Zersetzung von Kohlenwasserstoffen als auch die selektive katalytische Reduktion (SCR) von NOₓ zu katalysieren, kann ZSM-5 zur Reduzierung von Schadstoffen in Abgasen eingesetzt werden.

In Schritt (a) wird das elementare Eisen typischerweise in Pulverform verwendet, wobei die Teilchengröße in einem Bereich von 1 µm bis 1 mm liegt. Bevorzugt wird jedoch ein Bereich von 2 µm bis 80 µm, und am meisten bevorzugt ist die Teilchengröße in einem Bereich von 5 µm bis 30 µm. Die Wahl dieser spezifischen Teilchengrößen hat mehrere Gründe. Eine typische Untergrenze von 1 µm ermöglicht eine ausreichende Oberfläche für chemische Reaktionen, während eine typische Obergrenze von 100 µm zu einer langsameren Freisetzung von Fe²⁺-Ionen und zu einer kontrollierten Reaktion führt. Die bevorzugten Bereiche bieten einen Kompromiss zwischen einer hohen spezifischen Oberfläche und einer ausreichenden Reaktivität, um die Bildung von Eisenclustern zu vermeiden. Diese Größenordnung fördert eine gleichmäßige Verteilung des Eisens im Zeolith, was die katalytische Aktivität maximiert und die Bildung von Eisenclustern verhindert, die die katalytische Aktivität beeinträchtigen.

In Schritt (a) ist ein Massenverhältnis von Zeolith, organischer Säure und elementarem Eisen nicht weiter eingeschränkt. Das Verhältnis kann in einem Bereich von 1 : 5 bis 500 : 0,001 bis 1 liegen. Bevorzugt wird jedoch ein Massenverhältnis von Zeolith, organischer Säure und elementarem Eisen von 1 : 5 bis 200 : 0,005 bis 0,5, mehr bevorzugt von 1 : 10 bis 100 : 0,01 bis 0,3 und am meisten bevorzugt von 1 : 10 bis 50 : 0,05 bis 0,25. Diese spezifischen Verhältnisse tragen dazu bei, eine optimale Reaktion zwischen den Komponenten zu gewährleisten, was zu einer effektiven Bildung von Fe²⁺-Ionen und einer gleichmäßigen Verteilung von Eisen im Zeolith führt. Dadurch wird die katalytische Aktivität des resultierenden Katalysators erhöht. Zudem wird durch die Wahl der genannten Massenverhältnisse verhindert, dass unreagiertes elementares Eisen in der Suspension nach dem Umsetzen in Schritt (a) vorhanden ist. Das Massenverhältnis kann sich sowohl auf eine organische Säure in Reinform als auch auf eine wässrige verdünnte organische Säure beziehen.

Die Temperatur und Reaktionszeit des Umsetzens der Suspension in Schritt (a) ist ebenfalls nicht weiter eingeschränkt. Typischerweise wird das Umsetzen der Suspension in Schritt (a) bei einer Temperatur in einem Bereich von 30 °C bis 200 °C und einer Dauer von 0,5 h bis 72 h, bevorzugt bei einer Temperatur in einem Bereich von 50 °C bis 150 °C und einer Dauer von 1 h bis 24 h, mehr bevorzugt bei einer Temperatur in einem Bereich von 70 °C bis 120 °C und einer Dauer von 1 h bis 12 h, noch mehr bevorzugt bei einer Temperatur in einem Bereich von 75 °C bis 110 °C und einer Dauer von 1 h bis 6 h durchgeführt, da diese Bedingungen eine optimale Reaktionskinetik und eine effektive Bildung von Eisen-Spezies ermöglichen. Bei der Verwendung von Wasser als Lösungsmittel beziehungsweise bei der Verwendung von einer wässrigen verdünnten organischen Säure kann beispielsweise auch die Siedetemperatur von Wasser genutzt werden. Besonders bevorzugt ist in diesem Zusammenhang ein Temperaturbereich von 80 °C bis 120 °C. Wenn die Reaktion erst bei einer erhöhten Temperatur abläuft und noch nicht bei Raumtemperatur, bietet dies den Vorteil, dass eine bessere Kontrolle über die Reaktion ausgeübt werden kann, was zu einer verbesserten Sicherheit beträgt. Zudem kann über das Einstellen der Temperatur die Geschwindigkeit der Freisetzung der Fe²⁺-Ionen beeinflusst werden, was entscheidend für die Vermeidung von Aggregationen und der Bildung von großen Eisenclustern ist. Durch diese kontrollierte Freisetzung bleibt die katalytische Aktivität erhalten, da eine hohe Dichte an aktiven Zentren wie monomeren [Fe-(OH)₂]⁺-Zentren im Zeolith gebildet wird.

Bevorzugt wird der Schritt (a) unter einer Inertgasatmosphäre durchgeführt, um unerwünschte Reaktionen mit der Umgebungsluft zu vermeiden. Eine Inertgasatmosphäre bedeutet typischerweise einen deutlich reduzierten Sauerstoffgehalt, der weniger als 1000 ppm, bevorzugt weniger als 100 ppm, mehr bevorzugt weniger als 10 ppm, beträgt. Inertgase sind chemisch unreaktive Gase, die nicht mit anderen Substanzen reagieren, wodurch sie eine kontrollierte Reaktionsumgebung schaffen. Beispiele für Inertgase sind Argon und Stickstoff. Die Verwendung einer Inertgasatmosphäre verhindert die Oxidation der Fe²⁺-Ionen während des Umsetzens. Diese Oxidation kann zur Bildung von unerwünschten Eisenclustern führen, die die katalytischen Eigenschaften des eisenhaltigen Katalysators auf Zeolith-Basis negativ beeinflussen.

Das erfindungsgemäße Verfahren umfasst weiter den Schritt (b). In Schritt (b) wird ein fester Anteil der in Schritt (a) umgesetzten Suspension abgetrennt. Der feste Anteil bezieht sich auf die in der Suspension dispergierten Feststoffe, die nach der Reaktion in Schritt (a) vorliegen. Diese Feststoffe umfassen typischerweise die Zeolithpartikel, die mit Eisen-Spezies beladen wurden, sowie eventuell verbleibende nicht reagierte Feststoffe, die sich während der Umsetzung gebildet haben oder aus der Ausgangsmischung stammen wie beispielsweise unreagiertes elementares Eisen. Der feste Anteil kann Eisen-beladene Zeolithe, Eisenverbindungen oder andere Feststoffkomponenten umfassen, die nicht in einer flüssigen Phase der Suspension gelöst sind. Bevorzugt besteht der feste Anteil im Wesentlichen aus den Zeolithpartikeln.

Das Abtrennen des festen Anteils kann durch verschiedene Verfahren durchgeführt werden, die zur Trennung von Feststoffen und Flüssigkeiten geeignet sind. Zu den möglichen Methoden gehören Filtration, Zentrifugation oder Sedimentation. Bevorzugt wird die Filtration als Abtrennmethode verwendet, bei der die Feststoffe durch ein geeignetes Filtermaterial zurückgehalten und die flüssige Phase effektiv abgetrennt wird. Diese Methode ermöglicht eine effiziente Trennung und gewährleistet eine hohe Reinheit des abgetrennten festen Anteils. Alternativ kann die Zentrifugation eingesetzt werden, bei der die Suspension mit hoher Geschwindigkeit beschleunigt wird, um die Feststoffe aufgrund ihrer Dichte von der Flüssigkeit zu trennen. Ein weiteres Verfahren stellt die Sedimentation dar, bei der die Feststoffe durch Schwerkraft zu Boden sinken und anschließend die klare flüssige Phase dekantiert wird. Diese Methode kann durch die Zugabe von Flockungsmitteln beschleunigt werden, um die Teilchenaggregation zu fördern.

Bevorzugt umfasst das Verfahren weiter den folgenden Schritt (b1): Waschen des in Schritt (b) abgetrennten festen Anteils, bis ein neutraler pH-Wert der Waschlösung erhalten wird. Ein neutraler pH-Wert liegt typischerweise im Bereich von 6,5 bis 7,5. Der pH-Wert kann beispielsweise mit einem pH-Messgerät gemessen werden. Dieses elektronische Gerät ist mit einer pH-Elektrode ausgestattet, die in die Lösung eingetaucht wird. Das Messgerät liefert dann eine digitale Anzeige des pH-Werts, die eine präzise Bestimmung ermöglicht. Der pH-Wert kann ebenfalls mit pH-Indikatorstreifen gemessen werden. Diese Streifen sind mit speziellen Indikatorfarbstoffen beschichtet, die ihre Farbe je nach pH-Wert der Lösung ändern. Der Streifen wird dafür in die Lösung getaucht und die Farbe mit einer Rerenzfarbskala verglichen, um den pH-Wert zu bestimmen. Diese Methode ist jedoch weniger genau als ein pH-Messgerät; allerdings für die Bestimmung des vorstehenden neutralen pH-Wertes ausreichend. Die Waschlösung ist das Medium, das verwendet wird, um den abgetrennten festen Anteil in Schritt (b1) zu waschen. Bevorzugt wird Wasser als Waschlösung eingesetzt, da es ein universelles Lösungsmittel ist, das die meisten organischen Säuren effektiv löst. Bevorzugt werden mehrere Waschgänge mit kleineren Volumina des Lösungsmittels angewendet, um den abgetrennten festen Anteil in Schritt (b1) zu waschen. Durch das Waschen mit Wasser wird sichergestellt, dass unerwünschte Rückstände von unreagierten organischen Säuren entfernt werden, was zu einem neutralen pH-Wert der Waschlösung führt. Diese Reinigung trägt dazu bei, dass unreagierte organische Säuren und andere lösliche Verunreinigungen entfernt werden, die während des Umsetzungsprozesses nicht vollständig umgesetzt wurden. Durch die Entfernung dieser organischen Säuren wird sichergestellt, dass der Katalysator nicht mit unerwünschten Rückständen belastet ist, die die katalytische Aktivität beeinträchtigen.

Zusätzlich kann das Verfahren weiter den folgenden Schritt (b2) umfassen: Trocknen des in Schritt (b) abgetrennten oder des in Schritt (b1) gewaschenen festen Anteils bei einer Temperatur in einem Bereich von 20 °C bis 200 °C und einer Dauer von 1 h bis 24 h, bevorzugt bei einer Temperatur in einem Bereich 50 °C bis 150 °C und einer Dauer von 2 h bis 12 h und besonders bevorzugt bei einer Temperatur in einem Bereich von 100 °C bis 120 °C und einer Dauer von 4 h bis 8 h. Die Trocknung kann auch bei Raumtemperatur (15 °C bis 30 °C) erfolgen. Das Trocknen kann eingesetzt werden, um das Lösungsmittel vollständig zu entfernen und eine homogene, trockene Produktstruktur zu gewährleisten. Ohne diese Trocknung könnten störende Einflüsse beim anschließenden Calcinieren auftreten. Es gibt mehrere Trocknungsverfahren, die zum Einsatz kommen können, um den abgetrennten oder gewaschenen festen Anteil in Schritt (b2) zu trocknen. Zu den typischen Verfahren gehören Lufttrocknung, Ofentrocknung, Vakuumtrocknung, Mikrowellentrocknung und Spray-Trocknung.

Das erfindungsgemäße Verfahren umfasst weiter den Schritt (c). In Schritt (c) wird der in Schritt (b) abgetrennte feste Anteil einem Calcinieren unterzogen, um einen eisenhaltigen Katalysator auf Zeolith-Basis zu erhalten. Calcinieren bezeichnet in diesem Zusammenhang die thermische Behandlung des abgetrennten Feststoffs bei hohen Temperaturen in einer Atmosphäre, die bevorzugt sauerstoffhaltig ist. Sauerstoffhaltig bedeutet in diesem Zusammenhang, dass ein Sauerstoffgehalt von beispielsweise 10 bis 100, 20 bis 90, 30 bis 80, 40 bis 60 oder 10 bis 20 Vol.-% vorhanden ist. Dabei sollte der Sauerstoffanteil hoch genug sein, um die Oxidation der Eisen-Spezies im Zeolith zu ermöglichen. Besonders bevorzugt wird das Calcinieren an Luft, die typischerweise etwa 21 Vol.-% Sauerstoff enthält, durchgeführt. Das Calcinieren bewirkt eine Entfernung organischer Rückstände, die möglicherweise noch aus der organischen Säure oder anderen Reaktionskomponenten stammen, und gewährleistet einen eisenhaltigen Katalysators auf Zeolith-Basis, der frei von Katalysatorgiften wie organischen Rückständen, Halogeniden, Phosphaten, Sulfaten oder ähnlichem, ist.

Die Temperatur und Dauer beim Calcinieren des festen Anteils in Schritt (c) sind nicht weiter eingeschränkt. Typischerweise wird das Calcinieren des festen Anteils in Schritt (c) bei einer Temperatur in einem Bereich von 200 °C bis 900 °C und einer Dauer von 1 h bis 10 h durchgeführt. Bevorzugt wird eine Temperatur von 400 °C bis 600 °C und eine Dauer von 2 h bis 6 h, mehr bevorzugt eine Temperatur von 450 °C bis 550 °C und eine Dauer von 3 h bis 5 h, am meisten bevorzugt eine Temperatur von 550 °C und eine Dauer von ungefähr 4 h. In diesem Temperatur- und Zeitbereich wird eine effektive Umwandlung des festen Anteils in einen eisenhaltigen Katalysator auf Zeolith-Basis gewährleistet, wobei gleichzeitig die strukturelle Integrität des Zeoliths erhalten bleibt. Die oben genannte Calcinierungstemperatur und -dauer ist als relativ mild anzusehen und ist entscheidend, um die katalytische Aktivität zu erhöhen und unerwünschte Nebenprodukte zu verringern.

Wenn ein Schritt (b1) durchgeführt wird, wird das Calcinieren mit dem gewaschenen festen Anteil aus Schritt (b1) durchgeführt. Wenn hingegen ein Schritt (b1) und ein Schritt (b2) oder nur ein Schritt (b2) durchgeführt wird, wird das Calcinieren mit dem getrockneten festen Anteil aus Schritt (b2) durchgeführt. Diesbezüglich ist die bevorzugte Reihenfolge der Schritte des Herstellungsverfahrens der vorliegenden Erfindung wie folgt: Schritt (a), Schritt (b), gegebenenfalls Schritt (b1), gegebenenfalls Schritt (b2) und Schritt (c).

In einer weiteren Ausführungsform kann das Verfahren weiter das Umsetzen mit einem Kupfersalz, bevorzugt mit einem Kupfersalz einer organischen Säure, umfassen. Die Anionen des Kupfersalzes können beispielweise den in Schritt (a) eingesetzten organischen Säuren entsprechen, d.h. Formiat, Acetat, Propionat oder Oxalat. Bevorzugte Beispiele sind Kupfer(II)-formiat, Kupfer(II)-acetat, Kupfer(II)-propionat oder Kupfer(II)-oxalat, wobei Kupfer(II)-acetat besonders bevorzugt ist. Halogenid-, Sulfat- oder Phosphat-haltige Kupfersalze sind weniger bevorzugt. Das Umsetzen mit dem Kupfersalz erfolgt bevorzugt vor dem Calcinieren gemäß Schritt (c) des erfindungsgemäßen Verfahrens. Es kann beispielsweise ein Umsetzen mit einem Kupfersalz während dem Umsetzen gemäß Schritt (a) erfolgen oder bevorzugt in einem nachfolgenden Ionenaustauschschritt. Daraus ergibt sich eine bevorzugte Reihenfolge der Schritte des Herstellungsverfahrens der genannten Ausführungsform wie folgt: Schritt (a), Schritt (b), gegebenenfalls Schritt (b1), gegebenenfalls Schritt (b2), nachfolgender Ionenaustauschschritt und Schritt (c). Die Reaktionsbedingungen entsprechen dabei beispielsweise den vorstehend genannten Reaktionsbedingungen für Schritt (a) des erfindungsgemäßen Verfahrens. Dadurch werden Kupferionen gleichmäßig in das Zeolithgerüst eingebracht. Zudem können durch diese Ausführungsform die Einschränkungen etablierter Syntheserouten für bimetallische Fe/Cu-Katalysatoren überwunden werden, die auf ein Zeolithgerüst limitiert sind (CN 108452841 A; US 2021370279 A1) oder in denen in einem zweiten Ionentausch ein Verlust an bereits ausgetauschten Kupferionen verursacht werden kann (CN 112588313 A), was zu einer geringeren Effizienz der eingesetzten Rohstoffe führt.

Des Weiteren betrifft die vorliegende Erfindung einen eisenhaltigen Katalysator auf Zeolith-Basis, erhältlich durch das vorstehend beschriebene Verfahren, wobei die Eisenbeladung des eisenhaltigen Katalysators auf Zeolith-Basis von 0,01 bis 5 Gew.-% beträgt. Durch das Herstellungsverfahren, insbesondere durch die *in-situ* Bildung von Fe²⁺-Ionen und die gleichmäßige Verteilung des Eisens im Zeolith, wird die katalytische Aktivität des eisenhaltigen Katalysators auf Zeolith-Basis verbessert. Dies trägt dazu bei, dass der Katalysator eine hohe Aktivität aufweist, wie beispielsweise bei der Abgasreinigung oder bei Redoxreaktionen. Ein weiterer Vorteil des eisenhaltigen Katalysators auf Zeolith-Basis, erhältlich durch das vorstehend beschriebene Verfahren, ist die gleichmäßige Verteilung von monomeren [Fe-(OH)₂]⁺-Zentren im Zeolith, die eine Schlüsselrolle bei der katalytischen Aktivität spielen. Insgesamt bietet der Katalysator gemäß dem Verfahren eine hohe Effizienz, Stabilität und Aktivität in umweltrelevanten Prozessen wie der Reduktion von Stickoxiden (NOₓ) beispielsweise in Abgassystemen.

Der durch das Verfahren erhaltene eisenhaltige Katalysator auf Zeolith-Basis weist eine Eisenbeladung von 0,01 bis 5 Gew.-% auf. Diese Eisenbeladung hängt maßgeblich von dem in Schritt (a) verwendeten Massenverhältnis von elementarem Eisen zu den anderen Komponenten der Suspension ab. Eine niedrigere Eisenbeladung, beispielsweise im Bereich von 0,01 bis 2 Gew.-%, kann bei einem geringeren Anteil an elementarem Eisen erreicht werden und eignet sich besonders für Anwendungen, bei denen eine präzise Verteilung von Eisen auf dem Zeolith entscheidend ist. Höhere Eisenbeladungen, d.h. von 2 bis 5 Gew.-%, vorzugsweise 2 bis 3 Gew.-%, werden durch eine größere Menge an Eisen in der Suspension erreicht und eignen sich für Anwendungen, bei denen eine intensivere katalytische Aktivität benötigt wird.

Zur Bestimmung der Eisenbeladung des eisenhaltigen Katalysators auf Zeolith-Basis wird typischerweise das Verfahren der induktiv gekoppelten Plasma-Optischen Emissionsspektroskopie (ICP-OES) verwendet. Beispielsweise kann hierfür eine Messvorrichtung iCAP 7600 DUO von Thermofischer Scientific verwendet werden. Dazu wird eine definierte Menge des Katalysators in einer Flusssäure-Lösung (HF) gelöst. Typischerweise erfolgt dies durch Zugabe des Katalysators zu einer 1 bis 2 molaren HF-Lösung, wobei die Mischung gerührt oder erhitzt wird, um sicherzustellen, dass das Eisen vollständig in Lösung überführt wird. Wenn nach der Auflösung unlösliche Rückstände zurückbleiben, wird die Lösung filtriert, um eine klare Flüssigkeit zu erhalten. Anschließend wird die Eisenkonzentration in der HF-Lösung mittels ICP-OES gemessen. Die dabei detektierten charakteristischen Emissionslinien des ionisierten Eisens ermöglichen eine exakte Bestimmung der Eisenkonzentration. Durch Vergleich der gemessenen Eisenmenge mit der Gesamtmasse des Katalysators kann die Eisenbeladung in Gewichtsprozent (Gew.-%) berechnet werden.

In einer weiteren Ausführungsform kann der durch das Verfahren erhältliche Katalysator zusätzlich Kupfer mit einer Kupferbeladung von 0,01 bis 5 Gew-%, vorzugsweise 0,1 bis 3 Gew-%, umfassen. Beispielsweise kann die Beladungsmenge mit Kupfer der mit Eisen entsprechen. Derartige bimetallische Fe/Cu-Katalysatoren zeichnen sich dadurch aus, dass in herkömmlichen bimetallischen Fe/Cu-Katalysatoren auf Zeolith-Basis Eisen nicht als molekulare Spezies eingebaut ist, so dass sich der vorstehende durch das Verfahren erhältliche Katalysator der weiteren Ausführungsform strukturell von herkömmlichen bimetallischen Fe/Cu-Katalysatoren auf Zeolith-Basis unterscheidet. Insbesondere weist der durch das Verfahren erhältliche Katalysator der weiteren Ausführungsform ein sekundäres, aktives Zentrum auf, zeigt eine gleichmäßige molekulare Verteilung beider Metallionen im Zeolithgerüst und besitzt dadurch eine verbesserte katalytische Aktivität im Niedertemperaturbereich und eine verbesserte Beständigkeit gegenüber Katalysatorgiften. Zudem können Kupferionen gezielt in katalytisch aktivere Positionen innerhalb des Zeolithgerüsts eingebracht werden. Dadurch lassen sich auch Sekundäremissionen wie HCN und HCHO effizient neutralisieren.

Die Beladungsmenge mit Kupfer lässt sich typischerweise analog mit dem oben beschriebenen ICP-OES Verfahren bestimmen, wobei die detektierten charakteristischen Emissionslinien des ionisierten Kupfers eine Bestimmung der Kupferkonzentration ermöglichen. Durch Vergleich der gemessenen Kupfermenge mit der Gesamtmasse des Katalysators kann die Kupferbeladung in Gewichtsprozent (Gew.-%) berechnet werden.

Bevorzugt weist der durch das Verfahren erhältliche eisenhaltige Katalysator auf Zeolith-Basis keine FeₓO_{y}-Spezies auf der Oberfläche auf. Dies bedeutet, dass unerwünschte Eisencluster auf der Oberfläche des eisenhaltigen Katalysators auf Zeolith-Basis vermieden werden. FeₓO_{y}-Spezies, die in der vorliegenden Anmeldung auch als Eisencluster bezeichnet werden, verstopfen die Poren des Zeoliths und verringern dadurch die katalytische Aktivität. Diese Clusterbildung blockiert den Zugang zu den aktiven Zentren im Zeolith und reduziert die effektive Oberfläche des Katalysators, was seine katalytische Aktivität erheblich beeinträchtigt. Daher weist ein eisenhaltiger Katalysator auf Zeolith-Basis, der keine FeₓO_{y}-Spezies auf der Oberfläche aufweist, eine höhere Stabilität und Reaktivität auf, insbesondere in Anwendungen, wie etwa bei der Abgasreinigung oder in chemischen Umwandlungsprozessen.

Um zu bestimmen, dass keine FeₓO_{y}-Spezies auf der Oberfläche des eisenhaltigen Katalysators auf Zeolith-Basis vorhanden sind, wird ein UV-Vis-Spektroskopie-Verfahren genutzt. Dabei wird der Katalysator untersucht, um charakteristische Absorptionsbänder des Eisens zu identifizieren. Eine Absorptionsbande bei etwa 264 nm zeigt das Vorhandensein von oktaedrischen Fe-Zentren an, während eine Schulter bei etwa 215 nm auf tetraedrische Fe-Zentren hinweist. Diese beiden Bänder deuten auf die gewünschte fein verteilte Eisenstruktur an den Austauschstellen auf der Oberfläche des Zeoliths hin, die keine Eisencluster bildet. Entscheidend für den Nachweis, dass keine FeₓO_{y}-Spezies vorliegen, ist die Abwesenheit einer Absorptionsbande bei etwa 550 nm, da eine solche Bande auf die Bildung von Eisenoxiden wie Fe₂O₃ oder Fe₃O₄ hinweist. Wenn im Bereich von 550 nm keine signifikante Absorption beobachtet wird, sind keine störenden Eisencluster auf der Zeolithoberfläche vorhanden. Der Ausdruck "etwa" in diesem Zusammenhang bezeichnet Absorptionsbänder, die sich in einem spektralen Bereich von ± 5 nm um den angegebenen Wert bewegen. Beispielsweise bedeutet "etwa 550 nm", dass das Absorptionsmaximum zwischen 545 nm und 555 nm liegt. Der Begriff "signifikant" bezieht sich in der UV-Vis-Spektroskopie auf eine Absorption, die deutlich von der Basislinie abweicht. Das bedeutet, dass bei einer Untersuchung keine deutliche Erhöhung der Absorption im Bereich von 550 nm ± 5 nm auftreten sollte, was darauf hinweist, dass FeₓO_{y}-Spezies, wie Eisenoxide (z.B. Fe₂O₃ oder Fe₃O₄), nicht in signifikanten Mengen auf der Katalysatoroberfläche vorhanden sind. Eine solche Erhöhung wäre als signifikant anzusehen, wenn die Intensität der Absorption um mindestens 10%, bevorzugt 5%, mehr bevorzugt 3%, noch mehr bevorzugt 2% und am meisten bevorzugt 1%, im Verhältnis zu dem Peak mit der größten Intensität zwischen 200 nm und 500 nm über der Basislinie liegt.

Die Aufnahmen der UV-VIS-Spektren können beispielsweise mit einem UV-VIS-Spektrometer Lambda 650 der Firma Perkin Elmer mit verbauter Wolfram- und Deuterium-Lampe mit einer "Praying Mantis" diffusen Reflexionsoptik (Harrick) durchgeführt werden. Die Messungen werden hierbei im Reflektanzmodus durchgeführt. Eine Messung beinhaltet die Aufnahme von drei Spektren bei einer Wellenlänge von 800 nm bis 200 nm. Die hierbei erhaltenen Spektren werden beispielsweise mithilfe des Programms Origin (Version 2021b) gemittelt und durch die Kubelka-Munk-Funktion konvertiert. Aufgrund der hohen Absorbanz der untersuchten Proben ist durch Anwenden der Kubelka-Munk-Funktion ein linearer Zusammenhang zwischen Konzentration und Intensität der Spektren gegeben.

Bevorzugt weist der durch das Verfahren erhältliche eisenhaltige Katalysator auf Zeolith-Basis eine Abnahme der spezifischen Oberfläche von ≤ 10% im Vergleich zur spezifischen Oberfläche des in Schritt (a) umgesetzten Zeoliths auf, mehr bevorzugt weniger als 5%, noch mehr bevorzugt weniger als 3% und besonders bevorzugt weniger als 1 %. Diese minimale Reduktion der spezifischen Oberfläche zeigt, dass die Poren des Zeoliths nicht durch Eisencluster verstopft werden. Durch die kontrollierte Eisenverteilung und die Vermeidung von FeₓO_{y}-Spezies bleibt die Porenstruktur erhalten, was zu einer gleichmäßigen Verteilung der aktiven Eisenzentren führt. Dies ermöglicht eine hohe katalytische Aktivität und Stabilität, da der Zugang zu den reaktiven Zentren im Zeolith nicht blockiert ist. Insbesondere für Anwendungen wie die Abgasnachbehandlung oder Redoxprozesse, in denen eine hohe spezifische Oberfläche für die Reaktivität entscheidend ist, stellt diese Eigenschaft des Katalysators einen wichtigen Vorteil dar.

Die spezifische Oberfläche des durch das Verfahren erhaltenen eisenhaltigen Katalysators auf Zeolith-Basis wird typischerweise mithilfe der BET-Methode (Brunauer-Emmett-Teller) bestimmt. Die Messung der spezifischen Oberfläche kann beispielsweise mit einem Belsorp Mini II Gerät der Firma Bel Japan Inc. durchgeführt werden. Dabei werden Probenmengen von 80-100 mg verwendet, die vor der Messung 2 h bei 300 °C unter Vakuum ausgeheizt werden, um sicherzustellen, dass die Oberfläche der Probe frei von Verunreinigungen ist. Dieser Schritt entfernt adsorbierte Gase und Feuchtigkeit von der Katalysatoroberfläche. Die N₂-Physisorptionsmessungen werden bei -196 °C durchgeführt. Dabei wird gasförmiger Stickstoff in definierten Mengen auf die Probe geleitet, und die Adsorption des Gases auf der Oberfläche wird bei verschiedenen Partialdrücken gemessen. Die dabei entstehende Adsorptionsisotherme beschreibt das Volumen des adsorbierten Gases in Abhängigkeit vom Druck. Aus diesen Daten wird mit der BET-Gleichung die spezifische Oberfläche der Probe berechnet, die in m²/g angegeben wird. Anschließend wird die spezifische Oberfläche des eisenhaltigen Katalysators mit derjenigen des ursprünglichen Zeoliths, der in Schritt (a) eingesetzt wurde, verglichen.

Die Messdaten werden mittels der Belsorp Adsorption/Desorption Datenanalysesoftware unter Annahme einer Brunauer-Emmet-Teller-Isotherme (BET-Isotherme) ausgewertet. Eine Abnahme der spezifischen Oberfläche von ≤ 10%, bevorzugt weniger als 5%, mehr bevorzugt weniger als 3% und besonders bevorzugt weniger als 1%, deutet darauf hin, dass die Porenstruktur des Zeoliths durch die Eisenbeladung nicht signifikant beeinträchtigt wurde und keine Verstopfung durch Eisencluster stattgefunden hat. Diese minimale Reduktion der spezifischen Oberfläche ist ein Hinweis darauf, dass die Porenstruktur des Zeoliths intakt geblieben ist und die Eisenstellen fein verteilt vorliegen, wodurch eine hohe katalytische Aktivität und Stabilität gewährleistet wird.

Des Weiteren betrifft die vorliegende Erfindung die Verwendung des eisenhaltigen Katalysators, der vorstehend beschrieben ist. Die Verwendung umfasst die Durchführung mindestens einer chemischen Reaktion, ausgewählt aus der Gruppe, bestehend aus katalytischer Reduktion, oxidativer Spaltung von Diolen und Alkenen sowie oxidativer Funktionalisierung, einschließlich der Herstellung von Phenolen und Catecholen. Der Katalysator ermöglicht dabei eine selektive und effiziente Durchführung dieser Reaktionen. Die spezifischen Reaktionsbedingungen, wie Temperatur, Druck, Reaktionsmedium oder Reaktanten, sind nicht weiter eingeschränkt, sind dem Fachmann bekannt und können nach Bedarf oder Zielreaktion angepasst werden.

Für ein Verfahren zur Herstellung eines eisenhaltigen Katalysators auf Zeolith-Basis, für einen eisenhaltiger Katalysator auf Zeolith-Basis, erhältlich durch das Verfahren, und für die Verwendung des eisenhaltigen Katalysators auf Zeolith-Basis gibt es zahlreiche Anwendungsmöglichkeiten im Bereich der Abgaskatalysatoren und der industriellen Katalyse. Ein Hauptanwendungsgebiet ist die Abgasnachbehandlung in mobilen Applikationen, zum Beispiel Fahrzeugen, insbesondere in Dieselfahrzeugen, wo der Katalysator zur Reduktion von Stickoxiden (NOₓ) eingesetzt wird. Weitere potenzielle Anwendungen liegen in der Chemieindustrie, beispielsweise in Feinchemie wie oxidative C-C Spaltung an Diolen oder Olefinen, oder Oxidation von Aromaten. Besonders vorteilhaft können die erfindungsgemäßen eisenhaltigen Katalysatoren auf Zeolith-Basis in Systemen verwendet werden, in denen eine hohe katalytische Aktivität bei gleichzeitiger Vermeidung von Eisenclusterbildung entscheidend ist. Durch die feine Verteilung des Eisens im Zeolith-Gerüst wird eine optimale Nutzung der aktiven Zentren erreicht. Für die Verwendung des Katalysators in Abgassystemen werden vorzugsweise Oberflächen mit minimaler Verstopfung der Zeolithporen durch FeₓO_{y}-Spezies bevorzugt. Um dieses Ziel zu erreichen, ist eine gleichmäßige Verteilung des Eisens von zentraler Bedeutung, was bei dem erfindungsgemäßen Katalysator selbst bei höheren Eisenbeladungen gewährleistet ist.

### Beispiele

Das nachstehende allgemeine Verfahren und die Beispiele dienen der weiteren Erläuterung der vorliegenden Erfindung, ohne jedoch hierauf beschränkt zu sein.

### Allgemeines Verfahren

Zeolith (2 g) wird in verdünnter Essigsäure (25 mL Essigsäure/75 mL H₂O pro g (Zeolith)) in einem Rundkolben mit Rührfisch suspendiert und für 30 min mit Argon durchspült. Daraufhin wird Eisenpulver (elementares Eisen, Partikelgröße 10 µm) zur Suspension zugegeben (Menge abhängig von Beladung). Der Kolben wird mit einem Rückflusskühler verbunden und die Atmosphäre über eine Schlenk-Linie dreimal mit Argon ausgetauscht. Die Suspension wird unter stetigem Rühren für 12 h bei Reflux erhitzt. Danach wird die Reaktionsmischung abgekühlt und abfiltriert. Der Filterkuchen wird mit deionisiertem Wasser gewaschen, bis die Waschlösung farblos ist und einen pH von 7 erreicht. Der hierbei erhaltene Filterkuchen wird erst bei 75 °C für 12 h getrocknet und anschließend bei 550 °C für 5 h calciniert um organische Rückstände zu entfernen.

Tabelle 1 zeigt die verwendete Menge an Eisenpulver (mg) und die Volumina an Essigsäure und Wasser (mL) für die Herstellung eisenhaltiger Katalysatoren auf Zeolith-Basis der Beispiele 1 und 2 sowie daraus resultierende Fe-Beladung (Fe / Gew.-%) und die spezifische Oberfläche (m²/g), erhalten durch BET-Messung.

**Tabelle 1**

| **Beispiel** | **Zeolith** | **m(Fe) / mg** | **V(AcOH+H₂O) / mL** | **Si/Al Verhältnis / -** | **Fe / Gew.-%** | **S_{BET} / m²/g** |
|---|---|---|---|---|---|---|
| 1 | Fe-SSZ-13 | 60 | 200 | 14 | 1,37 | 784 |
| 2 | Fe-ZSM-5 | 60 | 200 | 13 | 2,59 | 380 |

### Beispiel 1

Im Rahmen dieses Beispiels wurde der Zeolith SSZ-13 (2 g) mit einem Si/Al-Verhältnis von 14 verwendet. Die spezifische Oberfläche von SSZ-13 vor der Reaktion betrug 712 m²/g. Zur Herstellung des eisenhaltigen Katalysators wurden 60 mg Eisenpulver (elementares Eisen, Partikelgröße 10 µm) in eine Suspension aus 50 mL Essigsäure und 150 mL deionisiertem Wasser (insgesamt 200 mL) gegeben. Nach dem beschriebenen Verfahren betrug die resultierende Eisen-Beladung des Zeolithen 1,37 Gew.-%. Die spezifische Oberfläche des erhaltenen Katalysators, bestimmt durch BET-Messung, lag bei 784 m²/g. Die gemessen spezifischen Oberflächen unterliegen im vorliegenden Bereich messungsbedingten Schwankungen von ca. +/- 30 m²/g. Somit ist weder ein Anstieg noch ein Abfall der spezifischen Oberfläche anzunehmen.

### Beispiel 2:

In diesem Beispiel wurde der Zeolith ZSM-5 (2 g) mit einem Si/Al-Verhältnis von 13 eingesetzt. Die spezifische Oberfläche von ZSM-5 vor der Reaktion betrug 387 m²/g. Auch hier wurden 60 mg Eisenpulver (Partikelgröße 10 µm) in einer Suspension aus 50 mL Essigsäure und 150 mL deionisiertem Wasser (insgesamt 200 mL) verwendet. Die resultierende Eisen-Beladung betrug 2,59 Gew.-%, was auf eine erhöhte Fähigkeit des ZSM-5 zur Aufnahme von Eisen hinweist. Die spezifische Oberfläche des erhaltenen Katalysators, bestimmt durch BET-Messung, lag bei 380 m²/g. Somit ist im Rahmen der Messungenauigkeit weder ein Anstieg noch ein Abfall der spezifischen Oberfläche anzunehmen.

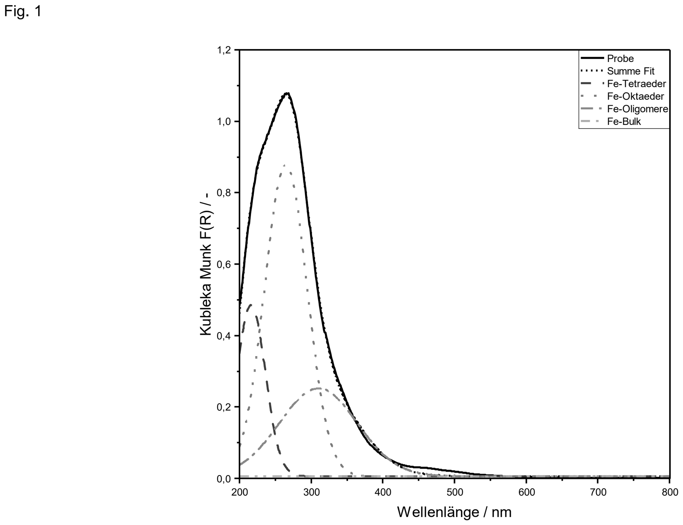

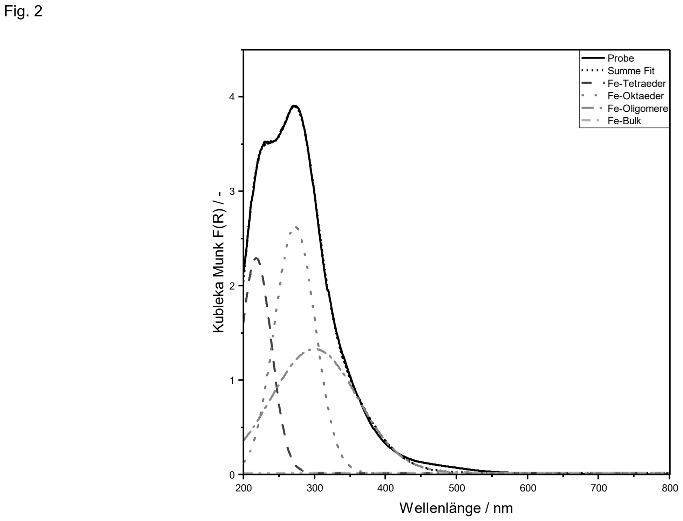

Im Vergleich zu herkömmlichen Methoden (beispielsweise in K. Niu, G. Li, J. Liu and Y. Wei, Journal of Solid State Chemistry, 2020, 287,121330) sind in UV-Vis Spektren der Beispiele 1 und 2 keine FeₓO_{y}-Spezies zu erkennen, was durch eine Abwesenheit einer Absorptionsbande bei etwa 550 nm indiziert ist. Fig. 1 zeigt ein UV-Vis Spektrum von Beispiel 1 nach Calcinieren der Probe und Fig. 2 zeigt ein UV-Vis Spektrum von Beispiel 2 nach Calcinieren der Probe. Für den Katalysator aus Beispiel 1 wurde eine starke Absorptionsbande mit einem Maximum bei 264 nm beobachtet, die auf die UV-Absorption von oktaedrisch koordinierten Fe-Zentren zurückzuführen ist. Ein Schulterbereich bei 215 nm deutet zusätzlich auf die Anwesenheit von tetraedrisch koordinierten Fe-Zentren hin. Das UV-Vis-Spektrum des Katalysators aus Beispiel 2 zeigt ähnliche Eigenschaften, jedoch sind die Absorptionsbanden leicht verschoben. Die Bande für tetraedrische Fe-Zentren ist bei 217 nm und die für oktaedrische Fe-Zentren bei 272 nm zu finden. Zusammenfassend zeigen Beispiel 1 und Beispiel 2 vergleichbare Absorptionsmerkmale, die auf eine Mischung aus tetraedrischen und oktaedrischen Fe-Zentren hindeuten. Die Verschiebung der Absorptionsbanden zwischen den Beispielen könnte auf Unterschiede in der Wechselwirkung des Eisen mit dem spezifischen Zeolithgerüst oder dessen Si/Al-Verhältnis zurückzuführen sein. Die Spektren beider Katalysatoren zeigen jedoch keine Hinweise auf FeₓO_{y}-Spezies.

Tetraedrische und oktaedrische Zentren beschreiben die spezifische Koordinationsumgebung der Eisenionen innerhalb des Zeolithgerüsts. Tetraedrische Zentren entstehen, wenn die Eisenionen von vier Sauerstoffatomen in einer tetraedrischen Geometrie umgeben sind. Diese Zentren sind charakteristisch für den Einbau von Eisen in die Gitterstruktur des Zeoliths und zeichnen sich durch eine hohe katalytische Aktivität aus, insbesondere bei oxidativen Reaktionen. Oktaedrische Zentren hingegen entstehen, wenn die Eisenionen von sechs Sauerstoffatomen koordiniert sind, die eine oktaedrische Geometrie bilden. Diese Zentren befinden sich häufig in den Poren oder an der Oberfläche des Zeolithen und können sowohl katalytisch aktive Einzelzentren als auch Vorstufen für oligomere Fe-Spezies darstellen. Die Kombination aus tetraedrischen und oktaedrischen Zentren verleiht dem Katalysator eine hohe Vielseitigkeit und ermöglicht verschiedene Reaktionsmechanismen, abhängig von der chemischen Umgebung.

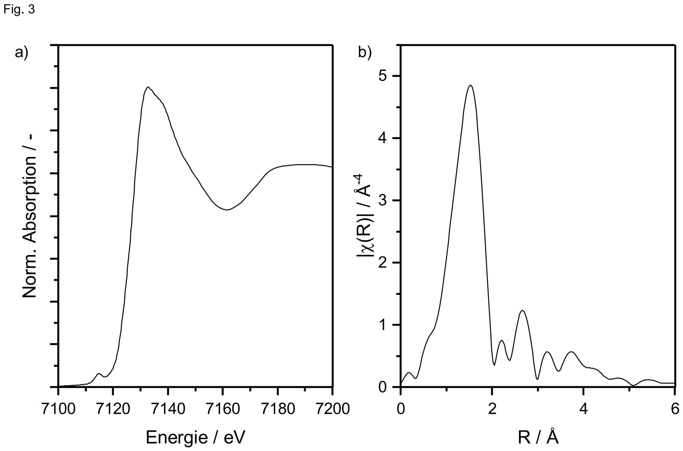

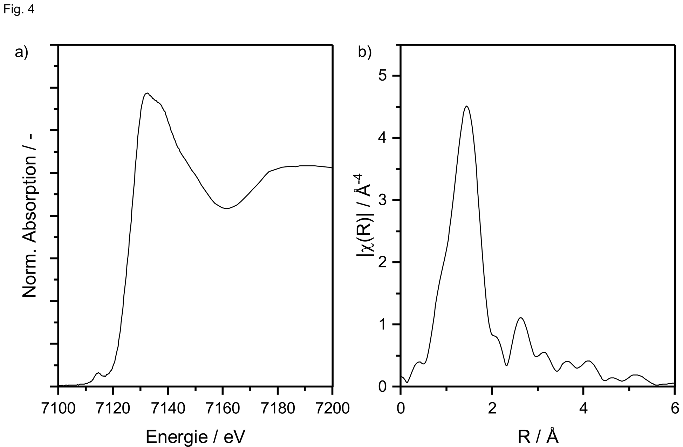

Die hergestellten eisenhaltigen Katalysatoren auf Zeolith-Basis aus Beispiel 1 und Beispiel 2 wurden ferner mittels Röntgenabsorptionsspektroskopie (XAS) charakterisiert, um ihre strukturellen und elektronischen Eigenschaften zu analysieren (Fig. 3 a) für Beispiel 1 und Fig. 4 a) für Beispiel 2). Im XANES-Spektrum zeigen beide Katalysatoren ein Pre-Edge-Feature bei 7114,5 eV sowie zwei White-Line-Features bei 7132,7 eV und 7137,2 eV, was auf eine vollständige Oxidation der Eisenionen zu Fe³⁺ hinweist. Die Intensität des XANES-Spektrums ist bei Beispiel 1 geringfügig höher als bei Beispiel 2, was jedoch keine grundlegenden Unterschiede in der Koordinationsumgebung der Fe-Ionen erkennen lässt. Diese Ergebnisse stimmen mit den zuvor diskutierten UV-Vis-Spektroskopiemessungen überein. Die FT-EXAFS-Spektren (Fig. 3 b) für Beispiel 1 und Fig 4 b) für Beispiel 2) beider Katalysatoren zeigen eine erste Koordinationsschale bei 1,5 Å, die dem Sauerstoff des Zeolithgerüsts zugeordnet wird. Darüber hinaus ist eine zweite Koordinationsschale bei 2,6 Å sichtbar, die die strukturelle Einbindung der Eisenionen in das Zeolithgerüst bestätigt. Zusammenfassend weisen die Katalysatoren aus Beispiel 1 und Beispiel 2 vergleichbare strukturelle Eigenschaften auf, wobei leichte Unterschiede in der Intensität der XANES-Spektren auf subtile Unterschiede im Zeolithgerüst und dessen Wechselwirkung mit den Eisenionen hinweisen könnten. Beide Katalysatoren sind jedoch durch eine vollständige Oxidation der Eisenionen und eine feinverteilte Einbindung von Eisen im Zeolithgerüst gekennzeichnet.

Die Aufnahmen der *ex-situ* XAS Messungen an der Fe K-Kante (7114 eV) wurden an der CAT-ACT Messlinie der KIT-Lightsource durchgeführt. Die Proben wurden als gepresstes Pellet mit einer Masse von 100 mg (80 mg Probe/20 mg Cellulose) gemessen. Der hierbei gemessene Bereich reichte von 6965 eV bis 7860 eV. Die Daten wurden mittels des Programm ATHENA ausgewertet. Für Fourier-transformierte EXAFS Analyse wurden die Daten mit k³ gewichtet und im Bereich k=3-12 Å⁻¹ durchgeführt.

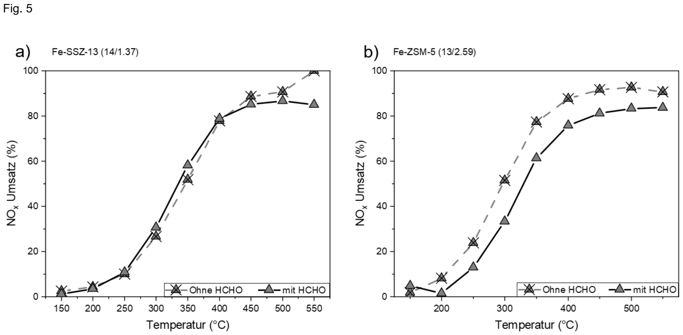

Zudem wurden die aus Beispielen 1 und 2 erhaltenen eisenhaltigen Katalysators auf Zeolith-Basis zur selektiven katalytischen Reduktion (SCR) von Stickoxiden (NOₓ) mit Ammoniak (NH₃) unter definierten Bedingungen verwendet. Dabei kam eine Gasmischung zum Einsatz, die aus 350 ppm NO, 350 ppm NH₃, 0 bis 80 ppm Formaldehyd (HCHO), 12% Wasserdampf (H₂O) und 10% Sauerstoff (O₂) in Stickstoff (N₂) bestand. Der Temperaturbereich wurde von 150 °C bis 550 °C gewählt, um die katalytische Aktivität sowohl bei niedrigen als auch bei hohen Temperaturen zu untersuchen. Die Raumgeschwindigkeit betrug 100.000 h⁻¹. die aus Beispielen 1 und 2 erhaltenen eisenhaltigen Katalysators auf Zeolith-Basis wurden auf einem Cordierit-Wabenkörper mit einer Struktur von 400 Zellen pro Quadratzoll (cells per square inch) aufgetragen. Der Wabenkörper hatte einen Durchmesser von 2,5 cm und eine Länge von 3,0 cm, wobei die aufgetragene Katalysatormasse 2,2 g betrug. Unter diesen Bedingungen zeigten die Katalysatoren eine ausgezeichnete Leistung für die selektive Reduktion von NOₓ. Der temperaturabhängige NOₓ Umsatz des aus Beispielen 1 erhaltenen eisenhaltigen Katalysators auf Zeolith-Basis ist in Fig. 5 a) dargestellt und der temperaturabhängige NOₓ Umsatz des aus Beispielen 2 erhaltenen eisenhaltigen Katalysators auf Zeolith-Basis ist in Fig. 5 b) dargestellt. Insbesondere wurde eine hohe Aktivität über einen breiten Temperaturbereich hinweg beobachtet, was die Effizienz bei niedrigen Temperaturen und die Stabilität sowie Selektivität bei höheren Temperaturen belegt. Die Zugabe von Formaldehyd (HCHO) zeigte, dass nur ein geringer Verlust der SCR Aktivität vorliegt. Bei der Untersuchung der NH₃-Oxidation wurde festgestellt, dass unterhalb von 350 °C keine signifikante Umsetzung von NH₃ stattfindet und oberhalb von 350 °C lediglich ein geringer Anstieg der NH₃-Konversion beobachtet wird. Dies deutet darauf hin, dass größere Eisencluster oder FeₓO_{y}-Spezies, die typischerweise eine hohe Aktivität für die NH₃-Oxidation zeigen, nicht in den erfindungsgemäßen eisenhaltigen Katalysatoren auf Zeolith-Basis vorhanden sind. Stattdessen weisen die Ergebnisse darauf hin, dass das Eisen feinverteilt im Zeolithgerüst vorliegt, was bereits aus den vorstehend genannten strukturellen Charakterisierungen hervorgeht. Dieses Beispiel verdeutlicht die Eignung der entwickelten Katalysatoren für realitätsnahe Anwendungen, insbesondere im Bereich der Abgasreinigung.

### Bimetallische Fe/Cu-Zeolithe / Beispiel 3

Zur Synthese von bimetallischen Fe/Cu-Zeolithen wurde von industriellen Proben von NH₄-SSZ-13 (Si/Al=14) Zeolith nach dem vorstehend beschriebenen allgemeinen Verfahren mit Eisen ausgetauscht (Stufe 1). Nach Waschen des erhaltenen Filterkuchens wurde das Produkt ebenfalls bei 75 °C getrocknet. Daraufhin wurde das erhaltene Pulver in einer wässrigen Cu(OAc)₂-Lösung (Fluka, Reinheit >99,0%) für 5 Tage bei Raumtemperatur suspendiert und es findet ein Ionenaustausch statt (Stufe 2). Das hierbei erhaltene Pulver wurde nach Trocknen bei 75 °C in statischer Atmosphäre bei 550 °C für 5 h calciniert.

Tabelle 2 zeigt Syntheseparameter für den zweistufigen Ionenaustausch des bimetallischen Fe/Cu-SSZ-13 Katalysators gemäß Beispiel 3 sowie die daraus resultierende Fe- und Cu- Beladung (Fe / Cu / Gew.-%) des erhaltenen bimetallischen Fe/Cu-Zeolithen.

**Tabelle 2**

| **Stufe** | **Zeolith** | **m(H-SSZ-13 / Fe-SSZ-13) / mg** | **m(Fe) / mg** | **V(AcOH) / mL** | **m(Cu(OAc)₂) / mg** | **V(H₂O) / mL** | **Fe / Gew.-%** | **Cu / Gew.-%** |
|---|---|---|---|---|---|---|---|---|
| 1 | Fe-SSZ-13; Si/Al=14 | 400 | 60 | 100 | - | 300 | | |
| 2 | Fe/Cu-SSZ-13; Si/Al=14 | 400 | - | - | 260 | 400 | 1,1 | 1,3 |

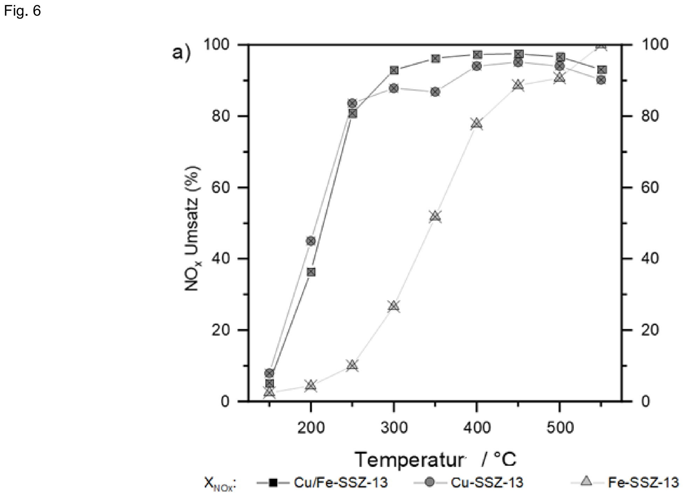

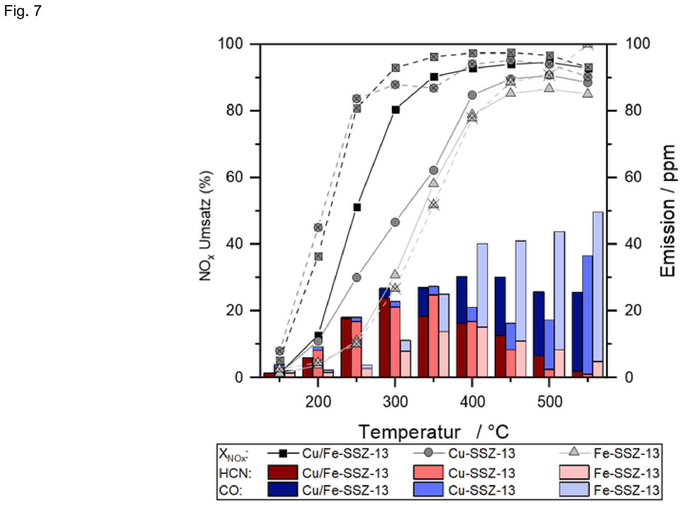

Während der NH₃-SCR über den bimetallischen Fe/Cu-SSZ-13-Katalysatoren in Abwesenheit von HCHO wurde eine hohe Aktivität beobachtet, wobei bei 250 °C ein Umsatz von 80% für NOₓ und NH₃ erreicht wurde. Wie in Fig. 6 und Fig. 7 gezeigt, weist der Fe/Cu-SSZ-13-Katalysator im Vergleich zu den monometallischen Fe-SSZ-13- und Cu-SSZ-13-Gegenstücken einen höheren NOₓ-Umsatz oberhalb von 250 °C auf. In Anwesenheit von HCHO konnte ähnlich zu den korrespondierenden monometallischen Katalysatoren eine Abnahme der SCR-Aktivität beobachtet werden, allerdings liegt mit 80% Umsatz bei 300 °C ein geringeres Ausmaß an Aktivitätsverlust im Vergleich zu den Cu-Zeolithen und eine höhere Aktivität im Vergleich zu Fe-Zeolithen vor (Fig. 7). Hierbei wird eine deutlich geringere Deaktivierung für Fe/Cu-SSZ-13 sowie relativ geringe HCN Emissionen beobachtet. Außerdem konnte ab 300 °C eine konstante Zunahme der CO-Emissionen mit steigender Temperatur beobachtet werden. Der Umsatz von HCHO erreichte bei 300 °C 80% und stagnierte dann bei etwa 90%.

Die Figuren zeigen:
Fig. 1 zeigt ein UV-Vis Spektrum von Beispiel 1 nach Calcinieren der Probe.
Fig. 2 zeigt ein UV-Vis Spektrum von Beispiel 2 nach Calcinieren der Probe.
Fig. 3 zeigt a) Röntgenabsorptions-Spektroskopie (XANES-Region) an der Fe K-Kante und b) Fourier-transformierte EXAFS (extended X-ray absorption fine structure) für Beispiel 1.
Fig. 4 zeigt a) Röntgenabsorptions-Spektroskopie (XANES-Region) an der Fe K-Kante und b) Fourier-transformierte EXAFS (extended X-ray absorption fine structure) für Beispiel 2.
Fig. 5 zeigt NOₓ Umsatz während der NH₃-SCR unter Einsatz des eisenhaltigen Katalysators erhalten a) aus Beispiel 1 und b) aus Beispiel 2 in Ab- und Anwesenheit von Formaldehyd. Gasmischung: 350 ppm NO, 350 ppm NH₃, 0 bis 80 ppm HCHO, 12% H₂O, 10% O₂ in N₂.
Fig. 6 zeigt den Umsatz von NOₓ während der SCR über Fe/Cu-SSZ-13 (Beispiel 3), Cu-SSZ-13 und Fe-SSZ-13; eine Gaszusammensetzung von 350 ppm NO, 350 ppm NH₃, 12% H₂O, 10% O₂ in N₂ wurde verwendet; Symbole mit "X" (durchgestrichen) zeigen den entsprechenden Wert in Abwesenheit von HCHO an.
Fig. 7 zeigt den Umsatz von NOₓ während der SCR in Ab- und Anwesenheit von HCHO über Fe/Cu-SSZ-13 (Beispiel 3), Cu-SSZ-13 und Fe-SSZ-13, sowie die gebildeten Sekundäremissionen in Anwesenheit von HCHO; eine Gaszusammensetzung von 350 ppm NO, 350 ppm NH₃, 0-80 ppm HCHO, 12% H₂O, 10% O₂ in N₂ wurde verwendet; Symbole mit "X" (durchgestrichen) zeigen den entsprechenden Wert in Abwesenheit von HCHO an; Symbole ohne "X" (nicht durchgestrichen) zeigen den entsprechenden Wert in Anwesenheit von HCHO an.

## Patentansprüche

1. Verfahren zur Herstellung eines eisenhaltigen Katalysators auf Zeolith-Basis, wobei das Verfahren die folgenden Schritte umfasst:
(a) Umsetzen einer Suspension, die einen Zeolith, elementares Eisen und eine organische Säure umfasst;
(b) Abtrennen eines festen Anteils der in Schritt (a) umgesetzten Suspension; und
(c) Calcinieren des in Schritt (b) abgetrennten festen Anteils, unter Erhalten eines eisenhaltigen Katalysators auf Zeolith-Basis.

2. Verfahren gemäß Anspruch 1, wobei die organische Säure in Schritt (a) mindestens eine ist, ausgewählt aus der Gruppe, bestehend aus Ameisensäure, Essigsäure, Propionsäure und Oxalsäure, wobei die organische Säure bevorzugt Ameisensäure oder Essigsäure, mehr bevorzugt Essigsäure ist.

3. Verfahren gemäß Anspruch 1 oder 2, wobei der Zeolith in Schritt (a) ein Aluminosilikat, bevorzugt SSZ-13 oder ZSM-5, ist.

4. Verfahren gemäß einem der Ansprüche 1 bis 3, wobei das elementare Eisen in Schritt (a) elementares Eisen in Pulverform mit einer Teilchengröße in einem Bereich von 1 µm bis 1 mm, bevorzugt in einem Bereich von 2 µm bis 80 µm und mehr bevorzugt in einem Bereich von 5 µm bis 30 µm, ist.

5. Verfahren gemäß einem der Ansprüche 1 bis 4, wobei das Umsetzen der Suspension in Schritt (a) bei einer Temperatur in einem Bereich von 30 °C bis 200 °C und einer Dauer von 0,5 h bis 72 h durchgeführt wird.

6. Verfahren gemäß einem der Ansprüche 1 bis 5, wobei der Schritt (a) unter einer Inertgasatmosphäre durchgeführt wird.

7. Verfahren gemäß einem der Ansprüche 1 bis 6, wobei das Verfahren weiter den folgenden Schritt umfasst:
(b1) Waschen des in Schritt (b) abgetrennten festen Anteils, bis ein neutraler pH-Wert einer Waschlösung erhalten wird.

8. Verfahren gemäß einem der Ansprüche 1 bis 7, wobei das Verfahren weiter den folgenden Schritt umfasst:
(b2) Trocknen des in Schritt (b) abgetrennten oder des in Schritt (b1) gewaschenen festen Anteils bei einer Temperatur in einem Bereich von 20 °C bis 200 °C und einer Dauer von 1 h bis 24 h.

9. Verfahren gemäß einem der Ansprüche 1 bis 8, wobei das Calcinieren des festen Anteils in Schritt (c) bei einer Temperatur in einem Bereich von 200 °C bis 900 °C und einer Dauer 1 h bis 10 h durchgeführt wird.

10. Verfahren gemäß einem der Ansprüche 1 bis 9, wobei die organische Säure in Schritt (a) als eine wässrige verdünnte organische Säure mit einem Massenverhältnis aus Säure zu Wasser in einem Bereich von 1 : 0,1 bis 500 vorliegt.

11. Verfahren gemäß einem der Ansprüche 1 bis 10, wobei ein Massenverhältnis von Zeolith, organischer Säure und elementarem Eisen in Schritt (a) in einem Bereich von 1 : 5 bis 500 : 0,001 bis 1 liegt.

12. Verfahren nach einem der Ansprüche 1 bis 11, wobei das Verfahren das zusätzliche Umsetzen mit einem Kupfersalz umfasst, wobei das Kupfersalz bevorzugt ein Kupfersalz einer organischen Säure ist.

13. Eisenhaltiger Katalysator auf Zeolith-Basis, erhältlich durch das Verfahren gemäß einem der Ansprüche 1 bis 12, wobei eine Eisenbeladung des eisenhaltigen Katalysators auf Zeolith-Basis von 0,01 bis 5 Gew.-% beträgt.

14. Eisenhaltiger Katalysator auf Zeolith-Basis gemäß Anspruch 13, wobei eine Kupferbeladung des eisenhaltigen Katalysators auf Zeolith-Basis von 0,01 bis 5 Gew.-% beträgt.

15. Eisenhaltiger Katalysator auf Zeolith-Basis gemäß Anspruch 13 oder 14, wobei die Oberfläche des eisenhaltigen Katalysators auf Zeolith-Basis keine FeₓO_{y}-Spezies aufweist.

16. Eisenhaltiger Katalysator auf Zeolith-Basis gemäß einem der Ansprüche 13 bis 15, wobei eine Abnahme der spezifischen Oberfläche des eisenhaltigen Katalysators auf Zeolith-Basis in Bezug auf die spezifische Oberfläche des in Schritt (a) umgesetzten Zeoliths ≤ 10% beträgt.

17. Verwendung des eisenhaltigen Katalysators gemäß einem der Ansprüche 13 bis 16 zur Durchführung mindestens einer Reaktion, ausgewählt aus der Gruppe, bestehend aus katalytischer Reduktion, oxidativer Spaltung und oxidativer Funktionalisierung.
